# EUROPEAN PATENT APPLICATION

(11) **EP 1 698 658 A1**
(43) Date of publication of application: **06.09.2006**
(21) Application number: 04819808.9
(22) Date of filing: 29.11.2004
(51) Int. Cl.: C08L 1/00, C08L 3/00, C08L 5/02, C08L 5/08, C08K 3/22, C08K 3/28, C08K 5/16

(54) **RESIN COMPOSITION, SHAPED ARTICLE USING SUCH RESIN COMPOSITION AND METHOD FOR PRODUCING RESIN COMPOSITION**

(30) Priority: 02.12.2003 JP 2003403478; 02.12.2003 JP 2003403479
(71) Applicant: SONY CORPORATION, Tokyo 141-0001 (JP)
(72) Inventor: YAMADA, Shinichiro, c/o SONY CORPORATION, Tokyo 141-0001 (JP); FUJIHIRA, Yuko c/o SONY CORPORATION, Tokyo 141-0001 (JP); HORIE, Takeshi c/o SONY CORPORATION, Tokyo 141-0001 (JP); MORI, Hiroyuki c/o SONY CORPORATION, Tokyo 141-0001 (JP); NOGUCHI, Tsutomu c/o SONY CORPORATION, Tokyo 141-0001 (JP)
(74) Representative: Müller, Frithjof E.
(86) International application number: PCT/JP2004/017729
(87) International publication number: WO 2005/054359

(57) **Abstract**

Disclosed is a biodegradable resin composition containing at least one biodegradable polysaccharide, a flame retardant additive containing a hydroxide, and a hydrolysis suppressing agent suppressing the hydrolysis of the at least one biodegradable polysaccharide. The hydroxide contains at least a metal hydroxide, which metal hydroxide is at least one of aluminum hydroxide, magnesium hydroxide and calcium hydroxide. The flame retardant additive preferably further contains a nitrogen compound.

## Description

### Technical Field

This invention relates to a biodegradable resin composition, a molded product, an electrical product prepared from this resin composition, and a method for the preparation of the resin composition.
The present invention contains subject matter related to Japanese Patent Applications 2003-403478 and 2003-403479, filed in the Japanese Patent Office on December 2, 2003, the entire contents of which being incorporated herein by reference.

### Background Art

Up to now, a large variety of synthetic resin materials have been developed and marketed and are being used in ever increasing numbers in many industrial fields. The amount of the synthetic resin materials used is increasing from year to year, with the quantity of annual production of the synthetic resin materials approaching ten millions of tons. The result is that the quantity of the synthetic resin discarded is increasing, and its disposal has presented a serious social problem. If directly incinerated, the discarded resin yields toxic gases or damages an incineration furnace, due to significant heat of combustion, thereby seriously imperiling the environment.
Among known processing methods for disposal of the wasted resins, there are a method of incinerating the wasted resin after turning the wasted resin into a low molecular material by pyrolysis or chemical decomposition, and a method of using the wasted resin for land-filling. However, the processing by incineration is accompanied by emission of carbon dioxide and hence may give rise to global warming. Moreover, if sulfur, nitrogen or halogens are contained in the incinerated resin, toxic emission gases, generated on incineration, may prove a cause of pollution of atmospheric air. On the other hand, in case the resin currently in use is discarded after use and used for land-filling, most of the resin is left without being decomposed for prolonged time, thus causing soil pollution.
In order to cope with this problem, manufacture and usage of plastics, mainly composed of bio-cellulose, derived from natural materials, or starch, cellulose based esters of low substitution degree, natural polyesters by fermentation, or aliphatic polyester resins by chemical synthesis, are under investigations as biodegradable plastics. The biodegradable resins are biochemically decomposed by microorganisms into carbon dioxide and water, for example. Thus, even if these biodegradable resins are discarded in the environment, they are readily decomposed into low molecular compounds innocuous to the environment. Hence, the use of biodegradable resins decreases the adverse effect of disposal on the global environment. For these reasons, researches into the use of the biodegradable resins for disposable products, centered about sundries for our everyday life, goods of hygiene or toys, are currently under way.
The state-of-the-art biodegradable resins are satisfactory from the perspective of safety to environment, as discussed above. However, the state-of-the-art biodegradable resins are not satisfactory as regards the flame retardant performance, the demand for which is increasing from the viewpoint of safety in actually using the resins. In particular, in the case of electrical products, there is a demand for facilitating post-recovery processing thereof by forming the casing from the biodegradable resin. However, for use as a casing for an electrical product, the material used must comply with the prescriptions for flame retardant properties as provided for in the Japanese Industrial Standard (JIS) or in the UL Standard (Underwriter Laboratory Standard). The biodegradable resins, currently in use, are not up to the prescriptions for flame retardant properties.
Moreover, when the biodegradable resins are applied to, for example, practical articles, such as casings of electronic equipment, the resins are required to exhibit high flame retardant properties and durability under high temperature high humidity conditions. For example, with a portable audio product, for example, it is required that physical properties, such as strength, shall be maintained for three to seven years under the conditions of a temperature of 30ºC and a relative humidity of 80%.
A variety of researches have so far been conducted in order to confer physical properties suited to practical molded products on the biodegradable resins. For example, a method consisting in blending a suitable amount of a biodegradable resin, displaying the properties, similar to those of rubber having a low glass transition temperature, to the aliphatic polyester resins, as typical of the biodegradable polymer, for improving biodegradability and moldability, has been proposed. A method consisting in adding calcium carbonate and/or magnesium carbonate to the aliphatic polyester resins, for improving the mechanical strength, has also been proposed. In addition, a method of melting poly-3-hydroxy lactic acid, followed by quenching and solidifying to form a molded product having a degree of crystallinity less than 50%, for improving biodegradability, has been proposed.
The molded products, formed of the biodegradable resins, so far proposed, are presupposed to be mainly used for films or packaging materials, while sufficient precautions have not been taken as to flame retardant performance or to preservation characteristics.

### Disclosure of the Invention

### Problems to be solved by the Invention

It is an object of the present invention to provide a resin composition, capable of removing the problems of the related art, molded products and electrical products employing this resin composition, and a method for the preparation of the resin composition.
It is another object of the present invention to provide a resin composition which will simultaneously achieve high flame retardant properties and preservation properties required of a casing material for an electrical product, a molded product and an electrical product prepared from the resin composition, and a method for the preparation of the resin composition.
The present inventors have conducted various investigations for improving the physical properties of biodegradable resins, and have found that the flame retardant performance of the biodegradable resins may be improved by admixing flame retardant additives to the biodegradable resin. As typical of the flame retardant additives are halogen-based flame retardant additives. However, the biodegradable resin, containing the halogen-based flame retardant additives, yield halogen gases, on incineration, and complex processing is required in order to make the halogen gases innocuous to the human being.
The present inventors have conducted eager searches towards finding a novel flame retardant additive. Based on these researches, the present inventors have found that, when a hydroxide is combined with a biodegradable resin, the resulting product acts as a superior flame retardant additive, and may be used as a flame retardant additive which takes environmental protection into account. The present inventors have also found that, if furthermore a hydrolysis suppressing agent is contained in the resulting product, preservation characteristics may also be improved. The above finding has led to completion of the present invention.
A resin composition according to the present invention comprises a resin composition comprising at least one biodegradable polysaccharide, a flame retardant additive containing a hydroxide, and a hydrolysis suppressing agent suppressing the hydrolysis of the at least one polysaccharide.
A further resin composition according to the present invention comprises a molded product obtained on molding a resin composition containing at least one biodegradable polysaccharide, a flame retardant additive containing a hydroxide and a hydrolysis suppressing agent for suppressing the hydrolysis of the at least one biodegradable polysaccharide.
An electrical product according to the present invention includes, as a constituent element thereof, a molded product obtained on molding a resin composition containing at least one biodegradable polysaccharide, a flame retardant additive containing a hydroxide and a hydrolysis suppressing agent for suppressing the hydrolysis of the at least one biodegradable polysaccharide.
A method for the preparation of a resin composition according to the present invention comprises mixing at least one biodegradable polysaccharide, a flame retardant additive containing a hydroxide, and a hydrolysis suppressing agent suppressing the hydrolysis of the at least one polysaccharide.
By adding the hydroxide as a flame retardant additive to the biodegradable polysaccharide, the hydroxide displays flame retardant effects by the endothermic action and generation of water on decomposition, when a high heat is afforded to the biodegradable polysaccharide, thereby conferring high flame retardant properties on the biodegradable polysaccharide.
Moreover, by adding the hydrolysis suppressing agent, the rate of the hydrolysis of the biodegradable polysaccharide is slowed down, as a result of which high mechanical strength may be maintained for a longer time than in case of non-addition of the hydrolysis suppressing agent. Since the resin composition of the present invention contains both the specified flame retardant additive and the hydrolysis suppressing agent, specific to the biodegradable polysaccharide, the flame retardant performance and the preservation performance may be achieved simultaneously.
A resin composition according to the present invention contains at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of the at least one polysaccharide.
A molded product according to the present invention is obtained on molding a resin composition containing at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of the at least one polysaccharide.
An electrical product according to the present invention includes, as a constituent element thereof, a molded product obtained on molding a resin composition containing at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of the at least one polysaccharide.
A method for the preparation of a resin composition, according to the present invention, comprises mixing at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of the at least one polysaccharide.
By adding at least one of an inorganic flame retardant compound, a boric acid based flame retardant compound, a halogen-based flame retardant compound, an organic flame retardant compound, a colloid-based flame retardant compound and a nitrogen-based flame retardant compound, contained as a flame retardant additive, to the biodegradable high molecular compound, high flame retardant performance may be conferred on the biodegradable polysaccharide.
Moreover, by addition of the hydrolysis suppressing agent, the rate of the hydrolysis of the biodegradable polysaccharide is slowed down, with the result that a high mechanical strength may be maintained for longer time than in case of non-addition of hydrolysis suppressing agents. Since the resin composition of the present invention contains the flame retardant additive and the hydrolysis suppressing agent specific to the biodegradable polysaccharide, the flame retardant performance and the preservation performance may be achieved simultaneously.
The resin composition according to the present invention has extremely high flame retardant properties, satisfying the range of V- to V-1 of the UL prescriptions, and high preservation properties which will permit a product molded from the composition to be used as a casing for an electrical product. Furthermore, after disposal, the resin composition affects the environment only to a limited extent.
Other objects and specified advantages of the present invention will become more apparent from the following explanation which will now be made in conjunction with the drawings.

### Best Mode for Carrying out the Invention

The resin composition according to the present invention, the method for the preparation thereof, and a molded product, as well as an electrical product, employing the resin composition, will now be explained in detail.
Initially, as a resin composition, according to the present invention, a resin composition containing a biodegradable organic high molecular compound, a hydroxide, as a flame retardant additive, and a hydrolysis suppressing agent, adjusting the rate of hydrolysis of the biodegradable organic high molecular compound, will be described.
In the following explanation, the biodegradable organic high molecular compound, sometimes abbreviated below to the biodegradable high molecular compound, means such compound as is decomposed after use into a low molecular compound, viz., ultimately decomposed into water and carbon dioxide by taking part of microorganisms in nature in a reaction process (Biodegradable Plastics Study Group, ISO/TC-207/SC3).
As the biodegradable organic high molecular compounds, polysaccharides are used in the present embodiment. Among polysaccharides, contained in the resin composition, there may be cellulose, starch, chitin, chitosan, dextran, one of derivatives thereof and a copolymer containing at least one of these compounds. The polysaccharide has a merit that it is higher in thermal resistance than the aliphatic polyester resin as a typical biodegradable high molecular material. As the polysaccharides, the above compounds may be used alone or in combination. A variety of plasticizers may be added for conferring thermoplastic properties on the polysaccharides.
The cellulose derivatives may be exemplified by esterified cellulose. Examples of the esterified cellulose include organic acid esters, such as cellulose acetate, cellulose butyrate or cellulose propionate, inorganic acid esters, such as cellulose nitrate, cellulose sulfate or cellulose phosphate, mixed esters, such as cellulose acetate propionate, cellulose acetate butyrate, cellulose acetate phthalate or cellulose nitrate acetate, and copolymers containing at least one of cellulose ester derivatives, such as polycaprolactone graft cellulose acetate. The esterified celluloses may be used alone or in combination.
The esterified cellulose, used in the resin composition of the present embodiment, may be prepared by known methods. The esterified cellulose may be prepared by complete acetylation of cellulose followed by partial saponification. The esterified cellulose prepared is added by a plasticizer for improving its moldability. Although there is no particular limitation to the plasticizer provided that it has good biodegradability and high plasticizing performance, low molecular ester-based plasticizers are preferred and phosphates or carboxylates are more preferred.
Examples of the phosphates include triphenyl phosphate (TPP), tricresyl phosphate (TCP), cresyl diphenyl phosphate, octyl diphenyl phosphate, diphenyl biphenyl phosphate, trioctyl phosphate and tributyl phosphate.
Examples of carbonates include phthalates and citrates. Concrete examples of the phthalates include dimethyl phthalate (DMP), diethyl phthalate (DEP), dibutyl phthalate (DBP), dioctyl phthalate (DOP), diphenyl phthalate (DPP) and diethylhexyl phthalate (DEHP). Concrete examples of the citrates include o-acetyl triethyl citrate (OACTE), o-acetyl tributyl citrate (OACTB), acetyl triethyl citrate and acetyl tributyl citrate.
Other examples of carbonates include a variety of trimellitates, such as butyl oleate, methyl acetyl ricinolate and dibutyl sebacate. These may be used either alone or in combination..
Glycolates may also be used. The glycolates may be exemplified by triacetin, tributyrin, butyl phthalyl butyl glycolate, ethyl phthalyl ethyl glycolate, methyl phthalyl ethyl glycolate and butyl phthalyl butyl glycolate. Of these, triphenyl phosphate, tricresyl phosphate, cresyl diphenyl phosphate, tributyl phosphate, dimethyl phthalate, diethyl phthalate, dibutyl phthalate, diocthyl phthalate, diethyl hexyl phthalate, triacetin and ethyl phthalyl ethyl glycolate are preferred. The plasticizers may be used either singly or in combination.
Starch-substituted derivatives, that are processed starch, may be prepared by known methods. The basic method for preparation of the starch-substituted derivatives, that are processed starch, is esterification. The starch ester, produced by this reaction, has so far been known as aqueous reaction esterified starch of low substitution degree (starch ester) (see pp.550 of 'Starch Science Handbook', published by ASAKURA-SHOTEN on July 20, 1997). As for the methods for preparing the starch ester of high substitution degree, there are, for example, a method of reacting an acid anhydride in pyridine using dimethyl aminopyridine or an alkali metal as a catalyst (pp. 332 to 336, "Starch Chemistry & Technology", by Wisler, published by Academic Press), and a method of carrying out the reaction in an acid anhydride at an elevated temperature of 100ºC or higher, with an aqueous solution of an alkali metal hydroxide as a catalyst (see Japanese Patent Publication Kohyo H5-508185 and page 73, March issue, Die Starke 1972). There is also a method of 'carrying out a reaction in a non-aqueous organic solvent using vinyl ester' (see Japanese Laid-Open Patent Publication H8-188601). A natural fatty acid, for example, may also be added to starch, as feedstock, to carry out etherification and graft polymerizing reaction to yield a starch substituted derivative as processed starch. Plasticizers may also be added in order to confer moldability (such as injection moldability, extrusion moldability or stretch moldability), comparable to that of ordinary thermoplastics (thermoplastic resins), to the starch substituted derivatives (starch ester).
The starch substituted derivative may also be such a one exhibiting thermoplastic properties without addition of plasticizers or with use only of a minor quantity of plasticizers (see for example the Japanese Laid-Open Patent Publication 2000-159802). This Patent Publication discloses a starch-substituted derivative in which hydrogen on a reactive hydroxyl group on the same starch molecule is substituted by a C6 to C24long-chain hydrocarbon containing group and a short-chain hydrocarbon containing group and in which the substitution degrees of the long-chain hydrocarbon containing group and the short-chain hydrocarbon containing group are adjusted to exhibit self thermo-plasticity as biodegradability is maintained. In the present starch-substituted derivative, the case where both the long-chain hydrocarbon containing group and the short-chain hydrocarbon containing group are acyl groups is excluded.
As the plasticizers, added to the starch, such as starch ester, those exhibiting high compatibility with respect to the starch ester are preferred. The following are examples of plasticizers, mainly ester type plasticizers, which may be used. For example, phthalate-based plasticizers may be enumerated by phthalates, such as dimethyl phthalate, diethyl phthalate or dibutyl phthalate, ethyl phthaloyl ethyl glycolate and butyl phthaloyl butyl glycolate, and fatty acid based ester based plasticizers may be enumerated by methyl oleate, methyl adipate, methyl stearate, ethyl oleate, ethyl adipate, ethyl stearate, butyl oleate, butyl adipate, butyl stearate, isopropyl oleate, isopropyl adipate and isopropyl stearate. Polyhydric alcohol ester based plasticizers may be enumerated by sucrol acetate, diethyl glycol benzoate, triacetin (triacetyl glycerin), tripropionion (tripropionyl glycerin), and acetyl diglycerin. Oxy-acid ester based plasticizers may be enumerated by acetyl methyl ricinolate and acetyl triethyl citrate. Phosphate based plasticizers may be enumerated by tributyl phosphate and triphenyl phosphate. Epoxy based plasticizers may be enumerated by epoxylated soybean oil, epoxylated castor oil and alkyl epoxy stearate, and high molecular based plasticizers may be enumerated by a variety of liquid rubber, terpenes and linear polyesters. Of these, especially the ester based plasticizers, such as acetyl triethyl citrate, ethyl phthaloyl ethyl glycolate, triacetin or tripropionin, are preferably employed.
In the present embodiment, hydroxides are mixed in the resin composition as flame retardant additive. The flame retardant additive may be compounded (added) by mixing or fixing to a target system. The flame retardant additive, thus added, acts as a flame retarder, stabilizer and an extender to confer e.g. flame retardant properties, stability and extendability on the biodegradable organic high molecular compounds as a target system for addition according to the present invention.
Since the hydroxide, as the flame retardant additive, has been added to the biodegradable organic high molecular compounds, the hydroxide absorbs heat evolved at the time of combustion of the resin, when the biodegradable organic high molecular compounds are subjected to elevated temperatures, such as 500ºC or higher. Thus, the hydroxide is decomposed, at the same time as it yields water, and hence flame retardant properties are displayed by the endothermic action and by water generation.
The flame retardant additive not only exhibits high flame retardant properties, but is decomposed after disposal into components safe against living bodies or to global environment, such as alumina, water or carbon dioxide. Hence, it does not affect the environment or the human being.
The hydroxide, as a component of the flame retardant additive, is a compound containing a hydroxyl group in a molecule and which yields water on heating. Specified examples of the hydroxides include those mainly composed of metal hydroxides, containing metal elements in the composition, specifically, aluminum hydroxide, magnesium hydroxide, calcium hydroxide, zinc hydroxide, cerium hydroxide, iron hydroxide, copper hydroxide, titanium hydroxide, barium hydroxide, berrylium hydroxide, manganese hydroxide, strontium hydroxide, zirconium hydroxide, gallium hydroxide, calcium aluminate hydrates (3CaO·Al2O3·6H2O), hydrotalcites (Mg6HA12(OH)16CO3·4H2O). Of these, aluminum hydroxide, magnesium hydroxide and calcium hydroxide are preferentially used.
The hydroxide preferably has the purity not lower than approximately 99.5%, because the higher the hydroxide, the higher becomes preservation stability when the hydroxide is combined with a hydrolysis suppressing agent. The purity of the hydroxide may be measured using any suitable conventional method. For example, measurement of the content of the impurities in a hydroxide by any of known methods and subtraction of the content of the impurities from the entire quantity gives the purity of the hydroxide. In the case of aluminum hydroxide, for example, the impurities may be exemplified by Fe2O3, SiO2, T-Na2O and S-Na2O. The content of Fe2O3 may be found by the O-phenanthroline absorptiometric method (JIS H 1901). The content of SiO2 may be found by the molybdenum blue O-phenanthroline absorptiometric method (JIS H 1901) following melting in a sodium carbonate- boric acid solution. The content of T-Na2O may be found by the flame photometric method following melting in sulfuric acid. The content of S-Na2O may be found by the flame photometric method following extraction in lukewarm water. The content found by any of the above methods is subtracted from the weight of aluminum hydroxide to give the purity of the hydroxide. Of course, plural different sorts of flame-retardant hydroxides may be combined provided that the hydroxides used are of purity not lower than 99.5 %.
Although there is no limitation to the shape of the hydroxides used in the present embodiment, the hydroxides used may preferably particulate. The particle size may be suitably selected depending on the sort of the flame retardant additive. For example, the average particle size of the hydroxide, as found by the laser diffraction method, is preferably approximately 100 µm or less. In this case, the particle size distribution is not crucial. From the perspective of injection moldability in the molding process and dispersibility at the time of kneading, the above-mentioned range of the average particle size is preferred and, within the above range, a smaller value is more preferred. Plural different sorts of the flame-retardant additives, with different average particle sizes, may, of course, be used in combination for improving the mixing ratio in the composition.
It is more preferred to use hydroxides in the form of particles having the BET specific surface, as found by the nitrogen gas adsorption method, of approximately 20 m2/g or less. Of course, plural different sorts of compounds with different BET specific surfaces may be used in combination for raising the mixing ratio thereof in the composition. From the perspective of moldability, the above-mentioned range of the BET specific surface is preferred and, in this range, a smaller value is more preferred.
The flame retardant additive preferably contains a nitrogen compound along with the above-mentioned hydroxide. Such a nitrogen compound, as a component of the flame retardant additive, which yields a combustion obstructing gas on heating, may be used. When high heat is afforded to the material to be added by the flame retardant additive, the nitrogen compound is decomposed to yield combustion obstructing gases to improve the flame retardant performance of the target material. This improved flame retardant performance is presumably due to relative decrease in the amount of oxygen for combustion in the vicinity of the target material, which is brought about by generation of the combustion obstructing gases. The combustion obstructive gases may be enumerated by nitrogen containing gases, such as nitrogen oxide based gases, e.g. nitrogen gases, nitrogen dioxide gases, nitrogen monoxide gases or N2O gases, generated on decomposition of nitrogen compounds.
With the flame retardant additive, containing both the hydroxide and the nitrogen compound, the flame retardant effect derived from the hydroxide and that derived from the nitrogen containing combustion obstructing gases, yielded by decomposition of the nitrogen compound, act synergistically when high heat (e.g. high heat exceeding 500ºC) is applied to the organic biodegradable high-molecular compound. Specifically, when a molded product of a biodegradable resin composition, containing the flame retardant additive of the present invention, is heated, the nitrogen oxide based gases (NxOy based gases), yielded on heating the nitrogen compound, is reacted with water generated by heating the hydroxide. Hence, by the thermal oxidizing action proper to nitric acid, generated by the reaction, the high molecular compounds, such as biodegradable resins, are converted to non-combustibles, such as CO2 or H2O, thus affording high flame retardant properties. Consequently, with the use of the hydroxide and the nitrogen compounds, as the flame retardant additive, it is possible to confer higher flame retardant properties to the biodegradable organic high molecular compound than if the hydroxide is used by itself.
The nitrogen compound, as a component of the flame retardant additive, may be such a compound containing at least a nitrogen oxide represented by NxOy, where x and y are natural numbers, in its composition. Specifically, a non-metallic nitric acid compound and/or a non-metallic nitrous acid compound may preferably be used. Specified examples of these compounds include nitrates (RONO2), such as acetyl nitrate (C2H3NO4), aniline nitrate (C6H8N2O3), methyl nitrate (CH30NO3), ethyl nitrate (C2H5ONO2), butyl nitrate (C4H90NO2), isoamyl nitrate ((CH3)2CHCH2CH2ONO2), isobutyl nitrate ((CH3)2CHCH2ONO2) or isopropyl nitrate ((CH3)2CHONO2), ammonium nitrate (NH4NO3), guanidine nitrate (CH6N4O3), cellulose nitrate acetate (nitroacetylcellulose), cellulose nitrate (nitrocellulose), urea nitrate, hydrodinium nitrate (N2H5NO3), hydroxyl ammonium nitrate ((NH3O)NO3) or benzenediazonium nitrate (C6H5N303), and nitrites (RONO), such as ammonium nitrite, ethyl nitrite, methyl nitrite, propyl nitrite, butyl nitrite, isobutyl nitrite and isoamyl nitrite. These compounds may be used alone or in combination as the nitrogen compounds.
The average particle size of the nitrogen compound is preferably not larger than 100 µm. The average particle size exceeding 100 µm is not desirable because there is fear that the mixing ratio or dispersibility may be lowered.
The flame retardant additive may be surface-processed, such as with a silane-, titanate-, aluminum- or zircoaluminum-based materials, with fatty acid based materials, or wax-based materials or with surfactants. Specifically, silane coupling agents, titanate-based coupling agents, aluminate-based coupling agents, fatty acid based materials, such as stearic acid, oleic acid, linolic acid, linoleic acid or eleostearic acid, calcium or zinc salts of the above fatty acids, or non-ionic surfactants, such as polyethylene glycol derivatives, may be used.
The amount of addition of the flame retardant additives is preferably such that 1 to 50 parts by weight of the nitrogen compound and 20 to 120 parts by weight of the hydroxide are used to 100 parts by weight of the organic high molecular compound of interest. With the amount of the nitrogen compound less than 1 part by weight, the above-mentioned effect is not displayed sufficiently. With the amount of the nitrogen compound exceeding 50 parts by weight, the mechanical strength of the organic high molecular compound, as a material for addition, tends to be lowered. The amount of addition of the nitrogen compound is more preferably 1 to 20 parts by weight. On the other hand, with the amount of addition of the hydroxide not more than 20 parts by weight, the above effect may not be displayed sufficiently. With the amount of addition of the hydroxide exceeding 120 parts by weight, the strength of the high molecular compound, as a target system for addition, may not be maintained at a sufficient value. It is noted that an optimum addition of the hydroxide is 30 to 100 parts by weight.
There is no particular limitation to the hydrolysis suppressing agent provided that the agent used suppresses the hydrolysis of the biodegradable high molecular compound. With the content of a material suppressing the hydrolysis of the biodegradable high molecular compound, the rate of hydrolysis of the biodegradable high molecular compound may be delayed, as a result of which high preservation characteristics may be displayed in the sense that high mechanical strength and high impact strength may be maintained for a prolonged time.
Specified hydrolysis suppressing agents may be exemplified by compounds exhibiting reactivity with active hydrogen contained in the biodegradable high molecular compound. By adding the above compound, it becomes possible to reduce the amount of active hydrogen in the biodegradable high molecular compound to prevent the biodegradable high molecular chain from being catalytically hydrolyzed by the active hydrogen. The active hydrogen herein means hydrogen in the bond of oxygen or nitrogen with hydrogen (N-H or O-H bond), this hydrogen being higher in reactivity than hydrogen in the carbon- hydrogen bond (C-H bond). More specifically, the active hydrogen is present in for example the carboxylic group -COOH, a hydoxy group -OH, an amino group -NH2 or in an amido linkage -NHCO-in the biodegradable high molecular compound.
The compound having reactivity to the active hydrogen in the biodegradable high molecular compound may be exemplified by a carbodiimide compound, an isocyanate compound and an oxazoline compound. In particular, the carbodiimide compound is desirable since the compound may be melted and kneaded with the biodegradable high molecular compound and addition of a minor quantity thereof is sufficient to suppress hydrolysis effectively.
The carbodiimide compound contains one or more carbodiimide groups in the molecule, and may be exemplified by a polycarbodiimide compound. For preparing the carbodiimide compound, such a method may be used which consists in using, as a catalyst, an organic phosphorus based compound, such as o,o-dimethyl-o-(3-methyl-4-nitrophenyl) phosphorthioate, o,o-dimethyl-o-(3-methyl)-4-(methylthio) phenyl) phosphorothioate, o,o-diethyl-o-2-isopropyl-6-methylpyrimidine-4-il phosphorothioate, or an organometal compound, such as a rhodium complex, a titanium complex, a tungsten complex or a palladium complex, and in subjecting a variety of polyisocyanates to decarbonating polycondensation in the absence of a solvent or in the presence of inert solvents, such as hexane, benzene, dioxane or chloroform, at a temperature approximately 70ºC or higher.
A monocarbodiimide compound, contained in the carbodiimide compound, may be exemplified by, for example, dicyclohexyl carbodiimide, diisopropyl carbodiimide, dimethylcarbodiimide, diisobutyl carbodiimide, dioctyl carbodiimide, diphenylcarbodiimide and naphthyl carbodiimide. Of these, dicycloehexyl carbodiimide or isopropyl carbodiimide, available industrially with ease, are most preferred.
The isocyanate compounds, exhibiting reactivity to active hydrogen in the biodegradable high molecular compound, may be enumerated by, for example, 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydro naphthalene diisocyanate, tetramethylene diisocyanate, 1,6-hexamethylene diisocyanate, dodecamethylene diisocyanate, trimethyl hexamethylene diisocyanate, 1,3-cyclohexylene diisocyanate, 1,4-cyclohexylene diisocyanate, xylylene diisocyanate, tetramethyl xylylene diisocyanate, hydrogenated xylylene diisocyanate, lysine diisocyanate, isophorone diisocyanate, 4,4'-dicyclohexyl methane diisocyanate or 3,3'-dimethyl-4,4'-dicyclohexyl methane diisocyanate.
The isocyanate compound may readily be prepared by known methods, or commercial products may be used. As typical of the commercial polyisocyanate compounds are aromatic isocyanate adducts, such as CORONATE (a trade name of hydrogenated diphenyl methane diisocyanate, manufactured by NIPPON POLYURETHANE Co. Ltd.) and MILLIONATE (a trade name of an aromatic diisocyanate adduct manufactured by NIPPON POLYURETHANE Co. Ltd.). If, in particular, the composition of the present embodiment is to be prepared by melt kneading, it is more preferred to use a solid polyisocyanate compound, than a liquid compound. In the solid polyisocyanate compounds used, a polyisocyanate compound, in which an isocyanate group is blocked by a masking agent, such as polyhydric aliphatic alcohol or an aromatic polyol, is preferred.
The oxazoline-based compound, reactive with active hydrogen in the biodegradable high molecular compound, may be enumerated by 2,2'-o-phenylenebis (2-oxazoline), 2,2'-m-phenylenebis (2-oxazoline), 2,2'-p-phenylenebis (2-oxazoline), 2,2'-p-phenylenebis (4-methyl-2-oxazoline), 2,2'-m-phenylenebis (4-methyl-2-oxazoline), 2,2'-p-phenylenebis (4,4'-dimethyl-2-oxazoline), 2,2'-m-phenylenebis (4,4'-dimethyl-2-oxazoline), 2,2'-p-ethylenebis (2-oxazoline), 2,2'-tetramethylenebis (2-oxazoline), 2,2'-hexamethylenebis (2-oxazoline), 2,2'-octamethylenebis (2-oxazoline), 2,2'-ethylenebis (4-methyl-2-oxazoline), or 2,2'-diphenylenebis (2-oxazoline). As the hydrolysis suppressing agent, the above compounds may be used either single or in combination.
There is no particular limitation to the sorts or the amount of the hydrolysis suppressing agent used. These may be determined depending on the ultimate product because the rate of biodegradation of the molded product and hence the mechanical strength may be adjusted by suitably adjusting the sorts or the amounts of the hydrolysis suppressing agent used. For example, the amount of the hydrolysis suppressing agent is preferably 20 parts by weight or less and more preferably 13 parts by weight or less to 100 parts by weight of the organic high molecular compound.
There is no limitation to the method for preparing the resin compound of the present embodiment such that any suitable known methods may be used. The method for preparing the resin composition by melt kneading the flame retarder and the hydrolysis suppressing agent to the biodegradable polysaccharide may be recited as a suitable method.
In the method for preparation by melt kneading, the flame retarder and the hydrolysis suppressing agent are added or mixed before or when melting the biodegradable organic high molecular compound. The flame retarder and the hydrolysis suppressing agent may be added separately or simultaneously. If the flame retarder and the hydrolysis suppressing agent are added separately, any one of them may be added initially. In an alternative method, a biodegradable organic high molecular compound is melted and thereafter a flame retarder or a hydrolysis suppressing agent is added and mixed. The resulting composition is re-melted together and the remaining one of the hydrolysis suppressing agent and the flame retarder is added and mixed. The hydroxide and the nitrogen compound, as the flame retardant additive, may be added simultaneously or separately. As the flame retardant additive, a product composed of the hydroxide and the nitrogen compound, may be used. Such product may be used alone or two or more of the products may be used.
Other suitable additives may be used in the resin composition of the present embodiment, for improving its performance, as long as such addition is not contrary to the object of the present invention. These other additives include, in addition to reinforcements, anti-oxidants, thermal stabilizers and UV ray absorbers, lubricants, waxes, coloring matter, crystallization accelerators, anti-dripping agents and degradable organic substances, such as starch, only by way of examples. These additives may be used either alone or in combination.
The reinforcements may be enumerated by, for example, fillers, such as inorganic and organic fillers. The inorganic fillers may include; in addition to carbon and silicon dioxide, fine particles of metal oxides, such as alumina, silica, magnesia or ferrite, silicates, such as talcum, mica, kaolin, zeolite or wollastonite, and fine particles, such as those of barium sulfate, calcium carbonate or fullerene. The inorganic fillers may include micro glass beads, carbon fibers, chalk, quartz, such as novoculite, asbestos, feldspar and mica. The organic fillers may include epoxy resin, melamine resin, urea resin, acrylic resin, phenolic resin, polyimide resin, polyamide resins, polyester resin or Teflon (trademark). Above all, silicon dioxide is preferred. It is noted that the reinforcements are not limited to the above-mentioned substances, and routinely used fillers, such as inorganic or organic fillers, may also be used. The above substances may be used alone or in combination as the reinforcements.
The anti-oxidants may be enumerated by, for example, phenol-based compounds, amine-based compounds, phosphorus-based compounds, sulfur-based compounds, hydroquinone-based compounds and quinoline-based compounds. Among the phenol-based compounds, there are hindered phenols, for example, C₂₋₁₀ allcylenediol- bis[3-(3,5-di-branched C₃₋₆ alkyl-4-hydroxyphenyl) propionates, such as 2,6-di-t-butyl-p-cresol, 1,3,5-trimethyl-2,4,6-tris (3,5-di-t-butyl-4-hydroxybenzyl) benzene, 2,2'-methylenebis (4-methyl-6-t-butylphenol), 4,4'-methylenebis(2,6-di-t-butylphenol), 4,4'-butylidenebis(3-methyl-6-t-butylphenol) or 1,6-hexanediol-bis [3-(3,5-di-t-butyl-4-hyroxyphenyl) propionate], di-or trioxy C₂₋₄ alkylenediol-bis [3-(3,5-di- branched C₃₋₆ alkyl-4-hydroxyphenyl) propionate], such as triethylene glycol-bis[3-(3-t-butyl-5-methyl-4-hydroxyphenyl) propionate], C₃₋₈ alkanetriol-bis [3-(3,5-di-branched C₃₋₆ alkyl-4-hydroxyphenyl) propionate], such as glycerin tris[3-(3,5-di-t-butyl-4-hydroxyphenyl) propionate, and C₄₋₈ alkanetetraol tetrakis [3-(3,5-d-branched C₃₋₆alkyl-4-bydroxyphenyl) propionates, such as pentaerythritol tetrakis [3-(3,5-di-t-butyl-4-hydroxyphenyl) propionate]. There are also n-octadecyl-3-(4',5'-di-t-butylphenyl) propionate, n-octadecyl-3-(4'-hydroxy-3',5'-di-t-butylphenol) propionate, stearyl-2-(3,5-di-t-butyl-4-hydroxyphenol) propionate, distearyl-3,5-di-t-butyl-4-hydroxybenzylphosphate, 2-t-butyl-6-(3-t-butyl-5-methyl-2-hydroxybenzyl)-4-methylphenylacrylate, N,N'-hexamethylenebis (3,5-di-t-butyl-4-hydroxyl-hydroxyamide), 3,9-bis[2-[3-(3-t-butyl-4-hydroxy-5-methylphenyl) propionyloxy] 1,1-dimethylethyl] 2,4,8,10-tetraoxaspiro [5,5] undecane, 4,4'-thiobis (3-methyl-6-t-butylphenol), and 1,1,3-tris(2-methyl-4-hydroxy-5-t-butylphenol) butane.
Among the amine-based anti-oxidants, there are, for example, phenyl-1-naphtylamine, phenyl-1-naphtylamine, phenyl-2-naphtylamine, N,N'-diphenyl-1,4-phenylenediamine, and N-phenyl-N'-cyclohexyl -1,4-phenylenediamine.
Among the phosphorus-based anti-oxidants, there are, for example, phosphite compounds, such as tridecyl phosphite, triphenyl phosphite, tris nonylphenyl phosphite, diphenyl isodecyl phosphite, phenyl diisodecyl phosphite, 2,2-methylenebis (4,6-di-t-butylphenyl) octyl phosphite, 4,4'-butylidenebis (3-methyl-6-t-butylphenyl) ditridecylphosphite, tris (2,4-di-t-butylphenyl) phosphite, tris (2-t-butyl-4-methylphenyl) phosphite, tris (2,4-di-t-amylphenyl) phosphite, tris (2,t-butylphenyl) phosphite, bis (2-t-butylphenyl) phenylphosphite, tris [2-(1,1-dimethylpropyl)-phenyl] phosphite, tris [2,4-(1,1-dimethylpropyl)-phenyl] phosphite, tris (2-cyclohexylphenyl) phosphite, and tris (2-t-butyl-4-phenylphenyl) phosphite. There are also phosphine compounds, such as triethyl phosphine, tripropyl phosphine, tributyl phosphine, tricyclohexyl phosphine, diphenyl vinylphosphine, allyldiphenyl phosphine, triphenyl phosphine, methylphenyl-p-anisylphosphine, p-anisyldiphenyl phosphine, p-tolyldiphenyl phosphine, di-p-anisylphenyl phosphine, di-p-tolylphenyl phosphine, tri-m-aminophenyl phosphine, tri-2,4-dimethylphenyl phosphine, tri-2,4,6-trimethylphenyl phosphine, tri-o-tolylphosphine, tri-m-tolylphosphine, tri-p-tolylphosphine, tri-o-anisylphosphine, tri-p-anisylphosphine or 1,4-bis (diphenylphosphino) butane.
As typical of the hydroquinone-based anti-oxidants is 2,5-di-t-butyl hydroquinone. As typical of the quinoline-based anti-oxidants is 6-ethoxy-2,2,4-trimethyl-1,2-dihydroquinoline. As typical of the sulfur-based anti-oxidants, there are dilauryl thiodipropionate and distearyl thiopropionate. Most preferred as anti-oxidants are phenolic anti-oxidants, in particular hindered phenols, such as polyol-poly[(branched C₃₋₆ alkyl group and hydroxyl group substituted phenyl) propionate]. The anti-oxidants may be used either alone or in combination.
The thermal stabilizers may be enumerated by, for example, nitrogen-containing compounds, such as basic nitrogen-containing compounds, e.g. polyamide, poly- 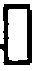 -alanine copolymers, polyacrylamide, polyurethane or melamine-formamide condensates, metal salts of organic carboxylic acids, such as calcium stearate or 12-hydroxy calcium stearate, metal oxides, such as magnesium oxide, calcium oxide or aluminum oxide, metal hydroxides, such as magnesium hydroxide, calcium hydroxide or aluminum hydroxide, alkali or alkali earth metal containing compounds, such as metal carbonates, zeolite and hydrotalcite. In particular, the alkali or alkali earth metal containing compounds, inter alia the alkali earth metal containing compounds, such as magnesium or calcium compounds, zeolite and hydrotalcite, are preferred. These thermal stabilizers may be used either alone or in combination.
The UV light absorbers may be enumerated by known compounds, such as benzophenone-based, benzotriazole-based, cyano acrylate based, salicylate-based or succinic acid anilide based compounds. Example of these compounds include [2-hydroxy-4-(methacryloyloxyethoxy) benzophenone]-methyl methacrylate copolymers, [2-hydroxy-4-(methacryloyloxymethoxy) benzophenone]-methyl methacrylate copolymers, [2-hydroxy-4-(methacryloyloxyoctoxy) benzophenone]-methyl methacrylate copolymers, [2-hydroxy-4-(methacryloyloxy dodesiloxy) benzophenone]-methyl methacrylate copolymers, [2-hydroxy-4-(methacryloyloxy benzyloxy) benzophenone]-methyl methacrylate copolymers, [2,2'-dihydroxy-4-(methacryloyloxyethoxy) benzophenone]-methyl methacrylate copolymers, [2,2' -hydroxy-4-(methacryloyloxyethoxy) benzophenone]-methyl methacrylate copolymers, and [2,2'-hydroxy-4-(methacryloyloxyoctoxy benzophenone)]-methyl methacrylate copolymers. These UV light absorbers may be used alone or in combination.
The lubricants may be enumerated by, for example, petroleum-based lube oils, such as fluid paraffin, synthetic lube oils, such as halogenated hydrocarbons, diester oils, silicon oils or fluorine silicon, a variety of modified silicon oils, such as epoxy-modified, amino-modified, alkyl-modified or polyether-modified silicon oils, silicon-based lubricating materials, such as copolymers of organic compounds, e.g. polyoxyalkylene glycol, and silicon, silicon copolymers, a variety of fluorine-based surfactants, such as fluoro alkyl compounds, fluorine-based lubricating materials, such as trifluoromethylene chloride low polymers, waxes, such as paraffin wax or polyethylene wax, higher aliphatic alcohols, higher fatty acid amides, higher fatty acid esters, higher fatty acid salts, and molybdenum disulfide. Of these, silicon copolymers, specifically, resins to which is polymerized silicon by block or graft polymerization, are particularly preferred. As the silicon copolymers, those obtained on graft or block copolymerization of silicon to acrylic resins, polystyrene resins, polynitrile resins, polyamide resins, polyolefinic resins, epoxy resins, polybutyral resins, melamine based resins, vinyl chloride based resins, polyurethane resins or polyvinyl ether resins, may be used. It is preferred to use the silicon graft copolymers. These lubricants may be used either alone or in combination.
The waxes may be enumerated by olefinic waxes, such as polypropylene wax or polyethylene wax, paraffinic waxes, Fischer Tropsch wax, micro-crystalline wax, montan wax, aliphatic acid amide based wax, higher aliphatic alcohol based wax, higher fatty acid based wax, higher acid ester based wax, carnauba wax, and rice wax. These waxes may be used either singly or in combination.
The coloring matter may be enumerated by inorganic pigments, organic pigments and dyes. The inorganic pigments may be enumerated by, for example, chromium-based pigments, cadmium-based pigments, iron-based pigments, cobalt-based pigments, Ultramarine, and Prussian blue. Specified examples of the organic pigments or dyes may be enumerated by, for example, carbon black, phthalocyanine pigments, such as phthalocyanine copper, quinacridone pigments, such as quinacridone magenta or quinacridone red, azo pigments, such as, for example, Hansa Yellow, disazo yellow, permanent yellow, permanent red or naphthol red, Nigrosin dyes, such as Spirit Black SB, Nigrosin base or Oil Black BW, Oil Blue, Pigment Yellow, Pigment Blue, Pigment Red and Alkali Blue. The coloring matter may be used either alone or in combination.
The crystallization accelerators may be enumerated by organic acid salts, such as, for example, p-t- sodium butyl benzoate, sodium montanate, calcium montanate, sodium palmitate, and calcium stearate, inorganic salts, such as, for example, calcium carbonate, calcium silicate, magnesium silicate, calcium sulfate, barium sulfate and talcum, and metal oxides, such as zinc oxide, magnesium oxide and titanium oxide. These crystallization accelerators may also be used alone or in combination.
As the anti-dripping agents, thermosetting resins, such as fluorine resins or phenolic resins, may be used. Examples of the fluorine resins may include fluorine-containing monomers, such as tetrafluoroethylene, chlorotrifluoroethylene, vinylidene fluoride, hexafluoropropylene, and perfluoroalkyl vinyl ether. These may be used either by itself or as a copolymer. Other examples include copolymers of the above fluorine-containing monomers with copolymerizable monomers, such as ethylene, propylene or (meth)acrylates. These anti-dripping agents may be used either alone or in combination.
The resin composition of the present embodiment may be processed in known manner. For example, the resin composition may be irradiated with active energy rays for suppressing the hydrolysis of the biodegradable high molecular compound contained in the resin composition of the instant embodiment.
The sources of active energy rays may be enumerated by, for example, electromagnetic waves, electron beams, corpuscular radiation, and combinations thereof. The electromagnetic waves may be enumerated by ultraviolet radiation (UV radiation) and X-rays, while the corpuscular radiation may be enumerated by radiation of corpuscles, such as protons and neutrons. In particular, irradiation with electron beams by an electron accelerator is most preferred.
The active energy rays may be illuminated using known illuminating units, such as, for example, UV illuminating devices or electron accelerators. There is no particular limitation to the exposure and intensity of exposure as long as hydrolysis of the biodegradable high molecular compound may effectively be delayed with the exposure and intensity of exposure used for the resin composition of the present embodiment. In the case of the electron beam, the acceleration voltage is desirably of the order of 100 to 5000 kV, while the exposure is desirably of the order of 1 kGy.
The molded products, obtained on molding the resin composition of the present embodiment, may be put to a variety of uses. The molding method, used for preparing molded products, may be enumerated by pressure forming, film forming, extrusion molding or injection molding. Of these, the injection molding is most desirable. Specifically, the injection molding is carried out as conventionally, using a uniaxial extruder, a multi-axial extruder or a tandem extruder. The injection molding may also be carried out, as conventionally, using known injection molding machines, such as an in-line screw injection extruder, a multi-layer injection molding machine or a double-head injection molding machine. There is no particular limitation to the methods for preparing molded products by molding the resin composition, and any of known molding methods may be used.
With the resin composition, containing the biodegradable organic high molecular compound, the hydroxide, as the flame retarder, and the hydrolysis suppressing agent, it is possible to achieve compatibility between extremely high flame retardant properties, satisfying the range of from V0 to V1, when evaluation is made by e.g. a UL combustibility test, and high preservation characteristics, which will sufficiently assure the use of the resin composition as a feedstock for a casing for an electrical product.
The molded product, formed of the resin composition of the present embodiment, is essentially composed of a biodegradable resin, which is a safe component for the living organism. This biodegradable resin may readily be decomposed in nature so that any adverse effects on the environment at the time of or after disposal may be diminished. Moreover, the flame-retardant additives, used in the present embodiment, exhibit high flame retardant properties and, after disposal, are decomposed into components which are not detrimental to the living organisms or the global environment, such as phosphorus, water or carbon dioxide. Hence, the flame-retardant additives do not have any adverse influences on the environment or on the human being. When the molded products are used for casings or packaging materials for electrical products, sufficient consideration has been taken for environmental protection as compared to the case of employing pre-existing synthetic resins or biodegradable resins.
The molded product, obtained on molding the resin composition of the present embodiment, may be applied with advantage as a component of each of the following electrical products for which it has so far been thought to be difficult to apply the biodegradable resin. Specified examples of the electrical products include stationary AV equipment, such as a DVD (Digital Versatile Disc) player, a CD (Compact Disc) player, an MD (Mini-Disc) player or an amplifier, loudspeakers, car-laden AV/IT equipment, PDA inclusive of electronic books, video decks, projectors, TV receivers, monitors, digital video cameras, digital still cameras, printers, radio receivers, radio receiver/ tape recorder, a system stereo, microphone, headphone, keyboards, headphone stereo, portable CD players, portable MD players, portable audio devices, such as so-called silicon audio players, refrigerators, laundry machines, air conditioners, personal computers, peripherals of the personal computers, stationary TV game machines, mobile phones, telephone sets, facsimile machines, copying machines and entertainment robots. The molded product of the present embodiment may be used as a casing for these electrical products. The molded products of the present embodiment may be used not only for a casing of an electrical product but also as a component part or structural element of an electrical product. When a molded product, obtained on molding a resin composition of the present embodiment, is used as a component element of an electrical product, the electrical product exhibits sufficient flame retardant properties and sufficient preservation characteristics. Moreover, since the resin composition of the present embodiment exhibits biodegradability, it is possible to diminish adverse effects on environment at the time of and after disposal as compared to the synthetic resin.
The use of the molded product, obtained on molding the resin composition of the present embodiment, and exhibiting biodegradability, is not limited to those shown above, and may safely be extended to almost all uses, such as a packaging material, a component part for cars, or other industrial products, to say nothing of disposable products, centered about necessaries of life, hygiene products or playthings.
In the following, certain Examples of the resin products according to the present invention will be described in detail.
<Experiment 1>
In Experiment 1, an Example of a resin composition according to the present invention, mentioned above, will be described.
(Preparation of samples)
As biodegradable organic high molecular compounds, (1) acetyl cellulose (360E-16, manufactured by DICEL FINE CHEM Co. Ltd), (A2) esterified starch (CPR-3M, manufactured by NIPPON CORN STARCH Co. Ltd), (B) a hydrolysis suppressing agent (Carbodilite HMV-8CA, manufactured by NISSIN BOSEKI Co. Ltd.) and a flame retardant additive (C1) aluminum hydroxide (manufactured by WAKO JUNYKU Co. Ltd., were used. A melt kneading method was used for mixing A, B and C together.
As for the conditions for kneading, a minimax-mixruder (manufactured by TOYO SEIKI Co. Ltd.) was used as a kneader. The nozzle temperature was set to 170 to 175ºC, the torque was set to 4 to 6 kg and the residence time was set to 3 sec or less. For mixing A to C, a melt kneading method was used. The additive was added to the resin by kneading. A resin mixture, thus obtained, was pulverized and pressed at 170ºC, by a pressure of 300 kg/cm2, so as to be formed into a plate 1.0 mm in thickness. The plate was cut into plural measurement test pieces each being of a size of 12.7 mm by 12.7 mm. The compositions of test pieces of Examples 1 to 10 and Comparative Examples 1 to 6 are shown in the following Table 1.
The test pieces of the Examples 1 to 10 and the Comparative Examples 1 to 6 were put to the following combustion and preservation tests to evaluate flame retardant properties and preservation characteristics.
(Combustion Test)
A perpendicular combustion test was carried out on the above test pieces in accordance with UL94 combustibility test V-0 to V-2. This method will now be explained.
Each sample was kept with its longitudinal axis on a plumb line and a site 6.4 mm from the upper end of each sample was held by a clamp of a ring stand. The foremost part of a burner was set at a spacing of 9.5 mm below the lower end of the sample and a horizontal layer of a dried absorbent cotton for surgical use was spread at a location 305 mm below the lower end of the sample. For providing the horizontal layer, a small piece of the cotton about 12.7 mm by 25.4 mm was torn off from the lump of the absorbent cotton, with the tip of a thumb finger and an index finger of an operator, and spread apart with the operator's fingers so that the piece of cotton is 50.8 mm square and has a spontaneous thickness of 6.4 mm.
The burner was placed at a position spaced apart from the sample and ignited. The burner, so ignited, was adjusted so that it will issue a blue flame 19 mm in height. Specifically, the amount of the gas supplied and an air port of the burner was adjusted so that initially a yellow blue flame was issued at 19 mm from the burner end. The air volume was then adjusted so that the foremost yellow flame disappeared. The height of the flame was again measured to make adjustment as necessary.
A test flame was applied to the center of the lower end of the test sample and kept there for ten seconds. The flame was then moved away from the sample at least 152 mm and the time during which the sample burned as it emitted a flame was recorded. When the flame of the sample extinguished, the test flame was immediately applied again to the lower end of the sample. In ten seconds, the flame was again moved away from the sample and the time duration of combustion with and without the flame was recorded. If it is difficult to distinguish between the presence of flame and absence of flame, the cotton for surgical use is contacted with the site at issue. If the cotton is ignited, the flame is assumed to be present. If, when the flame is contacted with the site at issue, melted or ignited sample portions are dripped from the sample, it is possible to tilt the burner at an angle of 45º and furthermore to move the burner slightly away from the 12.7 mm side of the sample to avoid the material from dripping into a burner tube. In case the fused or ignited sample portion is dripped from the sample or continues to be burned during the test, it is necessary to hold the burner manually to maintain the interval of 9.5 mm between the lower end of the sample and the distal end of the burner tube as long as the flame is contacted with the sample. The dripping of the fused cotton must be negligible, and the flame must be contacted with the sample center.
The material for 94V-1 approval, that is, the material approved to be 94V-1, must conform to the following conditions:
(a) None of the samples should burn with flame for 30 seconds or longer after each flame application;
(b) A total of ten flame contacting operations must be carried out for five samples of each set. The total of the burning time with flame must not exceed 250 seconds.
(c) The combustion with flame and that without flame of none of the samples should reach the supporting clamp.
(d) The absorbent cotton for surgical use, disposed 305 mm below, should not be ignited by cotton portions dripping from the cotton sample.
(e) None of the samples should continue to be burned in a flameless state for 60 seconds or longer after moving the flame apart a second time.
(Preservation Test)
The molded product, prepared using the resin composition of the present embodiment, is required to possess preservation characteristics to a certain extent, for use as a molded article in e.g. a casing of an electrical apparatus, even though the molded product is biodegradable. In this consideration, the preservation characteristics at elevated temperature and humidity were evaluated. For this evaluation, each sample was preserved for 100 hours, at a temperature of 80ºC and at a relative humidity of 80%, and the shape as well as the molecular weight of the sample after lapse of this time duration was measured. The same test pieces as those used in the above combustion test were used. The test pieces which were not problematical in shape and had a molecular weight upholding ratio from the pre-evaluation value of 80% or higher were evaluated 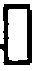 and those which failed to meet this requirement were evaluated x. The molecular weight was evaluated by the CPC (Gel Permeation Chromatography). The following Table 1 shows the results of the combustion and preservation tests of the Examples 1 to 10 and the Comparative Examples 1 to 6. Meanwhile, in the following table, [UL94-V1; 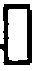 ] denotes that the sample in question is the 94V-1 approved material, while [UL94-V1; x] denotes that the sample in question is not the 94V-1 approved material.

**Table 1**

| | (A1) Acetyl cellulose (parts by weight) | (A2) esterified starch (parts by weight) | (B) hydrolysis suppressing agent (parts by weight) | (C1) aluminum hydroxide (part by weight) | UL94C-1 | preservability |
|---|---|---|---|---|---|---|
| Ex.1 | 100 | - | 10 | 30 | 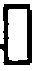 | 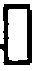 |
| Ex.2 | 100 | - | 10 | 50 | 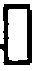 | 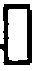 |
| Ex.3 | 100 | - | 10 | 70 | 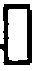 | 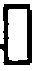 |
| Ex.4 | 100 | - | 10 | 90 | 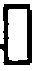 | 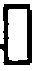 |
| Ex.5 | 100 | - | 10 | 110 | 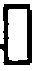 | 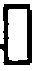 |
| Ex.6 | - | 100 | 10 | 30 | 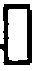 | 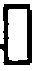 |
| Ex.7 | - | 100 | 10 | 50 | 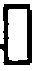 | 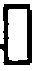 |
| Ex.8 | - | 100 | 10 | 70 | 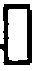 | 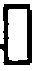 |
| Ex.9 | - | 100 | 10 | 90 | 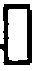 | 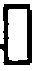 |
| Ex.10 | - | 100 | 10 | 110 | 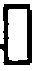 | 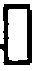 |
| Comp. Ex.1 | 100 | - | 10 | 20 | × | 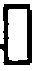 |
| Comp. Ex.2 | 100 | - | - | 50 | 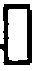 | × |
| Comp. Ex.3 | 100 | - | 10 | - | × | 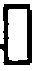 |
| Comp. Ex.4 | - | 100 | 10 | 20 | × | |
| Comp. Ex.5 | - | 100 | - | 50 | 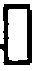 | × |
| Comp. Ex.6 | - | 100 | 10 | - | × | 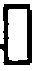 |

It is seen from the above Table 1 that the Examples 1 to 10, containing the biodegradable polysaccharides (A1 or A2), hydrolysis suppressing agent (B) and the hydroxide (C1), as the flame retardant additive, exhibited high flame retardant properties of complying with the UL94V-1 prescriptions, while also exhibiting good preservation characteristics. Conversely, the Comparative Examples 3 and 6, containing no flame retardant additives, failed to meet the UL94V-1 prescriptions. The Comparative Examples 2 and 5, containing the hydroxide (C1) but containing no hydrolysis suppressing agent, were low in preservation characteristics, even though they exhibited good flame retardant properties.
It is seen from the above results of Experiment 1 that the flame retardant properties and preservation properties may be achieved simultaneously by mixing the hydroxide as the flame retardant additive and the hydrolysis suppressing agent to biodegradable polysaccharides. It is also seen from comparing the Examples and the Comparative Example 1 and from comparing the Examples and the Comparative Example 4 that the high flame retardant performance may be reliably achieved by increasing the amount of addition of the hydroxide, that is, by adding the hydroxide in an amount exceeding 20 parts by weight to 100 parts by weight of the polysaccharide.
<Experiment 2>
Next, the case of employing both the hydroxide and the nitrogen compound will be scrutinized.
(Preparation of samples)
In the experiment 2, (C2) ammonium nitrate (manufactured by WAKO JUNYAKU-SHA) was used in addition to the hydroxide, as the flame-retardant additive. The remaining components are the same as those used in the experiment 1.
These feedstock materials were kneaded together in the same way as in experiment 1 to prepare measurement test pieces of Examples 11 to 20 and Comparative Examples 7 to 10. The compositions of the Examples 11 to 20 and Comparative Examples 7 to 10 are shown in the following Table 2.
The test pieces of the Examples 11 to 20 and Comparative Examples 7 to 10 were put to a combustion test and to a preservation test, in the same way as in experiment 1. The results of the combustion test and the preservation test are shown in the following Table 2.

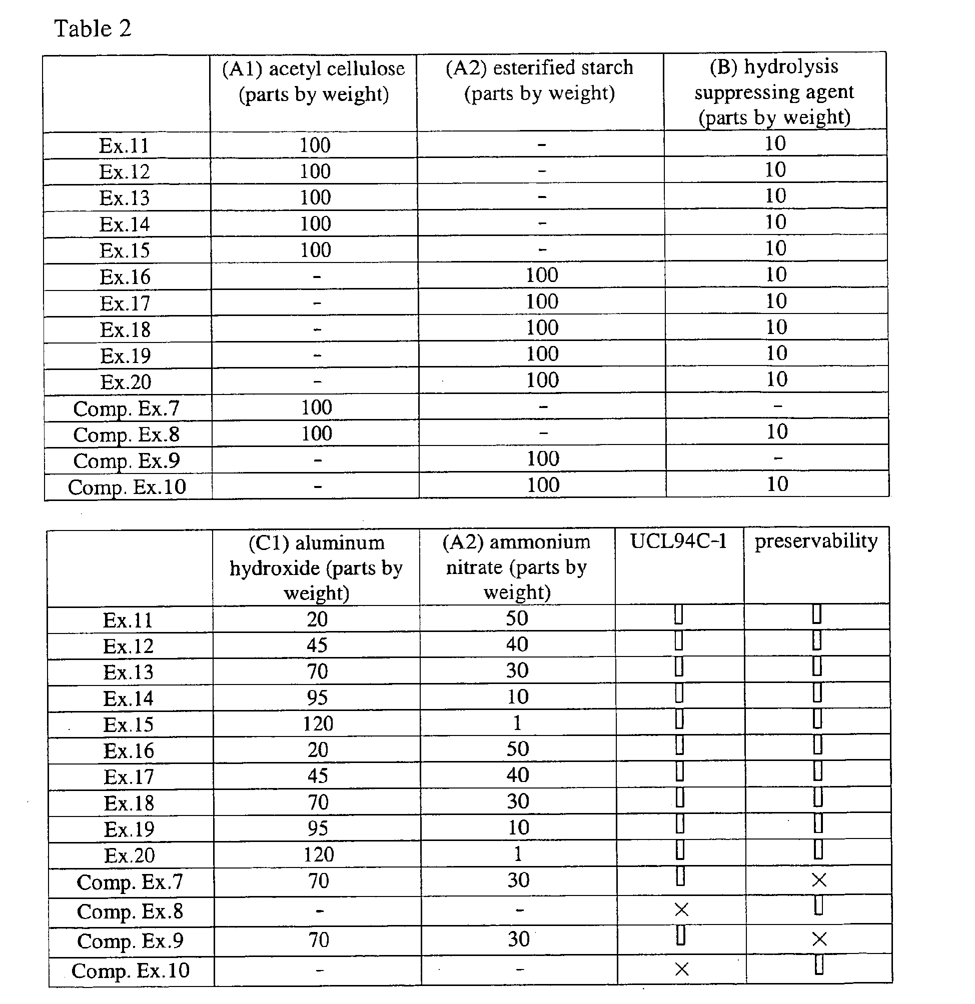

It is seen from the above Table 2 that the Examples 11 to 20, containing the biodegradable polysaccharides (A1 or A2), hydrolysis suppressing agent (B) and, as the flame retardant additive, the hydroxide (C1) and the nitrogen compound (C2), exhibited high flame retardant properties of complying with the UL94V-1 prescriptions, while also exhibiting good preservation characteristics. Conversely, the Comparative Examples 8 and 10, containing no flame retardant additives, failed to meet the UL94V-1 prescriptions. The Comparative Examples 7 and 9, containing the flame retardant additive but containing no hydrolysis suppressing agent, were low in preservation characteristics, even though they exhibited good flame retardant properties.
It is seen from the above results of Experiment 2 that the flame retardant properties and preservation properties may be achieved simultaneously by mixing the hydroxide and the nitrogen compound as the flame retardant additive to biodegradable polysaccharides.
Then, as a resin composition according to the present invention, such a resin composition containing a biodegradable organic high molecular compound, at least one of an inorganic flame retardant compound, a boric acid based flame retardant compound, a halogen-based flame retardant compound, an organic flame retardant compound, colloid-based-based flame retardant compound, and a nitrogen-based flame retardant compound, and a hydrolysis suppressing agent for adjusting the rate of hydrolysis of the biodegradable organic high molecular compound, will now be explained.
As the biodegradable organic high molecular compound, making up this resin composition, a polysaccharide is used, as in the case of the above-mentioned resin composition. Since the polysaccharide used may be the same as that described in the foregoing, reference is made to the foregoing description and further detail description is dispensed with.
In the instant embodiment, use may be made of the inorganic flame retardant compound, boric acid based flame retardant compound, halogen-based flame retardant compound, organic flame retardant compound, colloid-based-based flame retardant compound, or the nitrogen-based flame retardant compound, as the flame retardant additive, only by way of examples. The flame retardant additive may be used with one or more of the following flame retardant compounds.
Among inorganic flame retardant compounds, there are, for example, metal sulfate compounds, such as zinc sulfate, potassium hydrogensulfate, aluminum sulfate, antimony sulfate, sulfates, potassium sulfate, cobalt sulfate, sodium hydrogensulfate, iron sulfate, copper sulfate, sodium sulfate, nickel sulfate, barium sulfate or magnesium sulfate, ammo-based flame retardant compounds, such as ammonium sulfate, iron oxide based combustion catalysts, such as ferrocene, metal nitrate compounds, such as copper nitrate, titanium-containing compounds, such as titanium oxide, guanidine compounds, such as guanidine sulfaminate, zirconium-based compounds, molybdenum-based compounds, tin-based compounds, carbonates, such as potassium carbonate, and modified products thereof.
The boric acid based flame retardant compound may be exemplified by boric acid containing compounds, such as zinc borate hydrates, barium metaborate and borax.
The halogen-based flame retardant compound is a halogen-containing flame retardant compound, exemplified by chlorinated paraffins, perchlorocyclopentadecane, hexabromobenzene, decabromodiphenyloxide, bis(tribromophenoxy) ethane, ethylenebis·dibromo norbornane dicarboxyimide, ethylenebis·tetrabromo phthalimide, dibromoethyel·dibromo cyclohexane, dibromo neopentylglycol, 2,4,6- tribromophenol, tribromophenyl allylether, tetrabromo·bisphenol A derivative, tetrabromo·bisphenol S derivative, tetradecabromo·diphenoxy benzene, tris-(2,3-dibromopropyl)-isocyanurate, 2,2-bis (4-hydroxy-3,5- dibromophenyl) propane, 2,2-bis (4-hydroxyethoxy-3,5-dibromophenyl) propane, poly(pentabromobenzyl acrylate), tribromostyrene, tribormophenyl maleinide, tribromoneopentyl·alcohol, tetrabromo dipentaerythritol, pentabromobenzyl acrylate, pentabromophenol, pentabromotoluene, pentabromodiphenyl oxide, hexabromocyclodedecane, hexabromodiphenyl ether, octabromophenol ether, octabromodiphenyl ether, octabromodiphenyl oxide, magnesium hydroxide, dibromoneopentyl glycol tetracarbonate, bis(tribromophenyl) fumalamide, N-methylhexabromodiphenyl amine, styrene bromide, or diallylchlorendate.
The organic flame retardant compounds may be enumerated by chlorendic anhydride, phthalic anhydride, a compound containing bisphenol-A, a glycidyl compound, such as glycidyl ether, diethylene glycol, polyhydric alcohols, such as pentaerythritol, modified carbamides, silicon oils or silicon dioxide, low-melting glass or silica-based compounds, such as organosiloxane.
The colloid-based flame retardant compound may be exemplified by colloids of routinely used flame-retardant compounds, such as calcium aluminate, plaster dehydrate, zinc borate, barium metaborate, borax, hydrates of kaolin clay, nitrates, such as sodium nitrate, molybdenum compounds, zirconium compounds, antimony compounds, dorsonite or plogopite.
The nitrogen-based flame retardant compound may be enumerated by, for example, a cyanurate compound having a triazine ring.
There is no particular limitation to the hydrolysis suppressing agent, used in the resin composition of the instant embodiment, provided that the agent used suppresses the hydrolysis of the biodegradable high molecular compound, as in the case of the hydrolysis suppressing agent used in the aforementioned resin composition. With the resin composition of the instant embodiment, containing the hydrolysis suppressing agent, capable of suppressing the hydrolysis of the biodegradable high molecular compound, the rate of hydrolysis of the biodegradable high molecular compound is slowed down, as a result of which high preservation characteristics of maintaining high mechanical strength or high impact strength for prolonged time may be displayed.
Specified hydrolysis suppressing agents are those compounds exhibiting high reactivity with active hydrogen in e.g. biodegradable high molecular compounds as discussed above. As these compounds, the compounds given above may directly be used, so that reference may be made to the foregoing description and the detailed explanation is dispensed with.
There is no particular limitation to the sorts or amounts of the hydrolysis suppressing agent used in the resin composition of the present invention, like those of the hydrolysis suppressing agent used in the aforementioned resin composition. However, since the sorts or amounts of the hydrolysis suppressing agent may optionally be adjusted to adjust the rate of biodegradation and hence the mechanical strength of the molded product, they may be suitably determined from one target product to another. For example, the hydrolysis suppressing agent may preferably be used in an amount of 20 parts by weight and more preferably in an amount of 13 parts by weight or less to 100 parts by weight of the organic high molecular compound.
There is no limitation to the method for the preparation of the resin composition of the instant embodiment and any suitable known method may be used. A suitable method may be one in which the aforementioned flame retardant additive is melted and kneaded in a melted state in the biodegradable organic high molecular compound.
The method for preparation by melting and kneading may be carried out so that, before or when melting the biodegradable high molecular compound, a flame retardant additive or a hydrolysis suppressing agent is added and mixed to the compound. The flame retardant additive and the hydrolysis suppressing agent may be added simultaneously or separately. If the flame retarder and the hydrolysis suppressing agent are added separately, any one of them may be added first. In an alternative method, the biodegradable organic high molecular compound is melted and thereafter the flame retarder or the hydrolysis suppressing agent is added and mixed to the compound. The resulting composition is re-melted together and the remaining one of the hydrolysis suppressing agent and the flame retarder is added and mixed to the system.
Other suitable additives may be used in the resin composition of the present embodiment, for improving its performance, as long as such addition is not contrary to the object of the present invention. These other additives include, in addition to reinforcements, anti-oxidants, thermal stabilizers and UV ray absorbers, lubricants, waxes, coloring matter, crystallization accelerators, anti-dripping agents and degradable organic substances, such as starch, only by way of examples. These additives may be used either alone or in combination.
The reinforcement agents, added to the resin composition of the instant embodiment, may be fillers, such as organic or inorganic fillers, by way of examples. Since the aforementioned fillers may directly be used as these fillers, reference is made to the foregoing description and detailed explanation is dispensed with.
As anti-oxidants, phenol-, amine-, phosphorus-, sulfur-, hydroquinone- or quinoline-based anti-oxidants may be used, as in the above-described embodiment. Hence, the foregoing explanation is referenced and detailed description is dispensed with.
The thermal stabilizers or the UV ray absorbers, which may be used as additives in the resin composition of the instant embodiment, may be those already explained. Hence, the foregoing description is referenced and detailed explanation is dispensed with.
Moreover, the degradable organic materials, such as lubricants, waxes, coloring matter, crystallization accelerators, anti-dripping agents or starch, which may be used as additives, may be those already described, so that the foregoing description is referenced and detailed explanation is dispensed with.
The resin composition of the instant embodiment may be processed in any known manner. For example, active energy rays may be illuminated on the resin composition of the instant embodiment for suppressing the hydrolysis of the biodegradable high molecular compound in the resin composition.
Examples of the active energy rays include electromagnetic waves, electron rays, and rays of particles, either alone or in combination. The electromagnetic waves may be enumerated by ultraviolet rays (UV) and X-rays, while the rays of particles may be enumerated by rays of corpuscles, such as protons or neutrons. In particular, irradiation of electron rays by an electron accelerator is desirable.
The active energy rays may be illuminated using any suitable known devices, such as UV illuminating devices or electron accelerators. There is no limitation to the radiation dose and the radiation intensity provided that radiation dose and radiation intensity are such as will effectively delay the hydrolysis of the biodegradable high molecular compound. For example, in the case of the electron beam, the acceleration voltage of the order of 100 to 5000 kV and the radiation dose of the order of 1 kGy or higher are preferred.
The molded product, obtained on molding the resin composition of the present embodiment, may be put to a variety of uses. The molding method, used for preparing molded products, may be enumerated by pressure forming, film forming, extrusion or injection molding. Of these, the injection molding is most desirable. Specifically, the injection molding is carried out as conventionally, using a uniaxial extruder, a multi-axial extruder or a tandem extruder. The injection molding may also be carried out as conventionally, using known injection molding machines, such as an in-line screw injection extruder, a multi-layer injection molding machine or a double-head injection molding machine. There is no particular limitation to the methods for preparing molded products by molding the resin composition, such that any of known molding methods may be used.
With the resin composition, containing the biodegradable organic high molecular compound, the flame retardant additive, which is one of the inorganic flame retardant compound, boric acid based flame retardant compound, halogen-based flame retardant compound, organic flame retardant compound, colloid-based flame retardant compound and the nitrogen-based flame retardant compound, and the hydrolysis suppressing agent, it is possible to achieve the compatibility between extremely high flame retardant properties, satisfying the range of from V0 to V1, based on evaluation made by e.g. a UL combustibility test, and high preservation characteristics, which will sufficiently assure the use of the resin composition as a feedstock for a casing for an electrical product.
The molded product, formed by the resin composition of the present embodiment, is composed mainly of the biodegradable resin, as safe component for the living organism, and is decomposed with relative ease in nature. Hence, it is possible to diminish adverse effects on the environment at the time of or after disposal. Moreover, the flame retardant additive, used in the present embodiment, exhibits high flame retardant performance, while being decomposed, after disposal, into components safe for a living organism or global environment, such as alumina, water or carbon dioxide, thus not adversely affecting the ambient environment. Consequently, with the use of the molded product for a casing of an electrical product or a packaging material, sufficient consideration may be given to environment as compared to using the pre-existing synthetic resin material or the biodegradable resin.
Similarly to the aforementioned product, employing the resin composition, the molded product, obtained on molding the resin composition of the present embodiment, may be applied with advantage to a part of an electrical product for which it has been thought to be difficult to use the biodegradable resin. Concrete examples of the electrical products are the same as those described above and hence the detailed description is dispensed with.
The use of the molded product, obtained on molding the resin composition of the present embodiment, and exhibiting biodegradability, is not limited to that shown above. Thus, the molded product may safely be extended to almost all uses, such as a packaging material, a component part for cars, or other industrial products, to say nothing of disposable products, centered about necessaries of life, hygiene products or playthings.
In the following, a further Example of the resin product according to the present invention will be described in detail.
<Experiment 3>
(Preparation of samples)
As biodegradable aliphatic polyester, (A1) acetyl cellulose (360E-16, manufactured by DICEL FINE CHEM Co. Ltd.), (A2) esterified starch (CPR-3M, manufactured by NIPPON CORN STARCH Co.Ltd.), (B) a hydrolysis suppressing agent (CARBODILITE HMV-8CA, manufactured by NISSHIN BOSEKI-SHA), various flame retardant additives (C1: zinc sulfate, manufactured by WAKO JUNYAKU SHA), C2: barium metaborate, manufactured by WAKO JUNYAKU SHA, C3: tetrabromo bisphenol A derivative, manufactured by DSBG SHA, and C4: triazine, manufactured by WAKO JUNYAKU SHA), were used. A melt kneading method was used for mixing A, B and C.
As for kneading conditions, a MINIMAX-MIXRUDER, manufactured by TOYO SEIKI SHA, was used as a kneader. With the nozzle temperature set to 170 to 175ºC, the torque set to 4 to 6 kg and with the time of residence set to three seconds or less, an additive was added to the resin by kneading. The resin composite material, thus produced, was pulverized, and subjected to press working at 170ºC under a pressure of 300 kg/cm2, to form a plate 1.0 mm in thickness. The plate was cut to measurement test pieces, each being of a size of 12.7 mm× 12.7 mm. The composition of the test pieces of Examples 21 to 28 and Comparative Examples 11 to 16 are shown in Table 3.
A combustion test and a preservation test were then carried out in the following manner on the test pieces of the Examples 21 to 28 and the Comparative Examples 11 to 16, prepared as described above. Then, evaluation on the flame retardant properties and preservation characteristics was made of the test pieces.
(Combustion Test)
A perpendicular combustion test was carried out on the above test pieces in accordance with a UL94 combustibility test V-0 to V-2. This method will now be explained.
Each sample was kept with its longitudinal axis on a plumb line, and a site 6.4 mm from its upper end of each sample was held by a clamp of a ring stand. The foremost part of a burner was set 9.5 mm below the lower end of the sample and a horizontal layer of dried absorbent cotton for surgical use was spread at a point 305 mm below the lower end of the sample. For providing the horizontal layer, a small piece of the cotton about 12.7 mm by 25.4 mm was torn off from the lump of the absorbent cotton, with the tip of a thumb finger and an index finger of an operator, and spread apart with the operator's fingers, so that the piece of cotton is 50.8 mm square and has a spontaneous thickness of 6.4 mm.
The burner was placed at a position spaced apart from the sample and ignited. The burner, so ignited, was adjusted so that it will issue a blue flame 19 mm in height. Specifically, the amount of the gas supplied and an air port of the burner was adjusted so that initially a yellow blue flame will be issued at 19 mm from the burner end. The air volume was then adjusted so that the foremost yellow flame disappeared. The height of the flame was again measured to make adjustment as necessary.
A test flame was applied to the center of the lower end of the test sample and kept there for ten seconds. The flame was then moved away from the sample at least 152 mm and the time during which the sample burned as it emitted a flame was recorded. When the flame of the sample was extinguished, the test flame was immediately applied again to the lower end of the sample. In ten seconds, the flame was again moved away from the sample and the time durations of combustion with and without the flame were recorded. If it is difficult to distinguish between the presence of flame and absence of flame, the cotton for surgical use is contacted with the site at issue. If the cotton is ignited, the flame is assumed to be present. If, when the flame is contacted with the site at issue, melted or ignited sample portions are dripped from the sample, it is possible to tilt the burner at an angle of 45º during the time the flame is contacted with the sample, and furthermore to move the burner slightly away from the side of 12.7 mm of the sample to avoid the material from dripping into a burner tube. In case the fused or ignited sample portion is dripped from the sample or continues to be burned during the test, it is necessary to hold the burner manually to maintain the interval of 9.5 mm between the lower end of the sample and the distal end of the burner tube as long as the flame is contacted with the sample. The dripping of the fused cotton must be negligible, and the flame must be contacted with the sample center.
The material for 94V-1 approval, that is, the material approved to satisfy 94V-1, must conform to the following conditions:
(a) None of the samples should burn with the flame for 30 seconds or longer after each flame application;
(b) A total of ten flame contacting operations must be carried out for five samples of each set. The total of the burning time with flame must not exceed 250 seconds.
(c) The combustion with or without flames of none of the samples should reach the supporting clamp.
(d) The absorbent cotton for surgical use, disposed 305 mm below, should not be ignited by cotton portions dripping from the cotton sample.
(e) None of the samples should continue to be burned in a flameless state for 60 seconds or longer after moving the flame apart a second time.
(Preservation Test)
The molded product of the present invention, exhibiting high flame retardant properties, is required to possess preservation characteristics to a certain extent, for use as a molded article in e.g. a casing of an electrical apparatus, even though the molded product is biodegradable. In this consideration, the preservation characteristics at elevated temperature and humidity were evaluated. For this evaluation, each sample was preserved for 100 hours, at a temperature of 80ºC and at a relative humidity of 80%, and the shape as well as the molecular weight of the sample after lapse of this time duration was measured. The same test pieces as those used in the above combustion test were used. The test pieces which were not problematical in shape and had a molecular weight upholding ratio from the pre-evaluation value of 80% or higher were evaluated 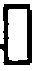 and those which failed to meet this requirement were evaluated ×. The molecular weight was evaluated by the CPC (Gel Permeation Chromatography). The following Table 3 shows the results of the combustion and preservation tests of the Examples 21 to 28 and the Comparative Examples 11 to 16. Meanwhile, in the following table, [UL94-V1; 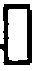 ] denotes that the sample in question is the 94V-1 approved material, while [UL94-V1; ×] denotes that the sample in question is not the 94V-1 approved material.

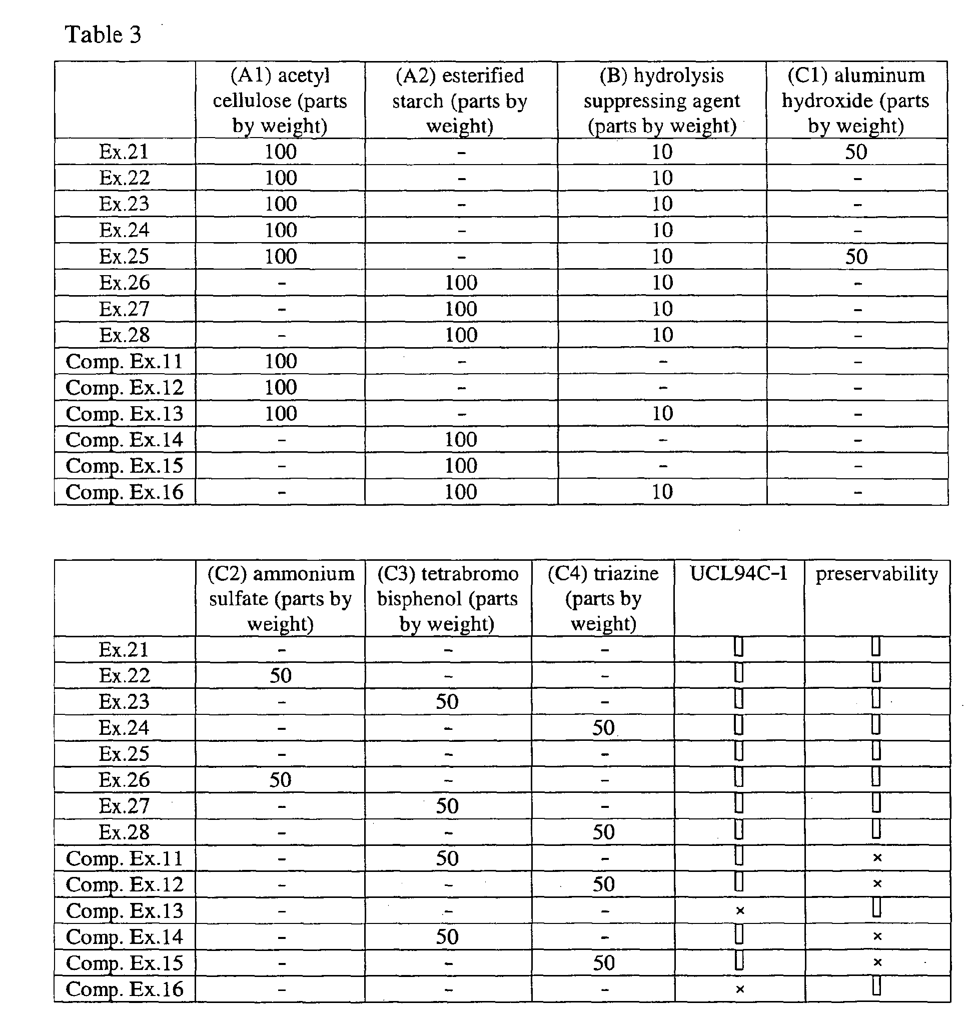

It is seen from Table 3 that the Examples 21 to Example 28, containing biodegradable polysaccharide (A1 or A2), hydrolysis suppressing agent (B) and flame retardant additives (any one of C1 to C4), exhibited high flame retardant properties to the extent that the UL94V-1 prescriptions is met, and also showed good preservation characteristics. Conversely, the Comparative Examples 13 and 16, not containing the flame retardant additive, failed to satisfy the UL94V-1 prescriptions. On the other hand, the Comparative Examples 11, 12, 14 and 15, containing the flame retardant additive (C3 or C4) but not containing the hydrolysis suppressing agent, were good in flame retardant properties, but were deteriorated in preservation characteristics.
It is seen from the results shown in Table 3 that, by adding the flame retardant compounds, such as inorganic flame retardant compounds, boric acid based flame retardant compounds, halogen-based flame retardant compounds or nitrogen-based flame retardant compounds, and the hydrolysis suppressing agent, to the biodegradable aliphatic polyester, it is possible to achieve compatibility between flame retardant performance and preservation characteristics.
Although the present invention has so far been explained with reference to the preferred embodiments, the present invention is not limited to the particular configurations of these embodiments. It will be appreciated that the present invention may encompass various changes or corrections such as may readily be arrived at by those skilled in the art within the scope and the principle of the invention.

## Claims

1. A resin composition comprising at least one biodegradable polysaccharide, a flame retardant additive containing a hydroxide, and a hydrolysis suppressing agent suppressing the hydrolysis of said at least one polysaccharide.

2. The resin composition according to claim 1 wherein said polysaccharide is cellulose, starch, chitin, chitosan, dextran, one of derivatives thereof, or a copolymer containing at least one thereof.

3. The resin composition according to claim 1 wherein said hydroxide includes at least a metal hydroxide.

4. The resin composition according to claim 3 wherein said metal hydroxide is at least one of aluminum hydroxide, magnesium hydroxide and calcium hydroxide.

5. The resin composition according to claim 1 wherein said hydroxide has purity not less than 99.5%.

6. The resin composition according to claim 1 wherein said hydroxide is in the form of particles with a BET specific surface area not higher than 5.0 m2/g.

7. The resin composition according to claim 1 wherein said hydroxide has an average particle size not higher than 100 µm.

8. The resin composition according to claim 1 wherein said flame retardant additive further contains a nitrogen compound.

9. The resin composition according to claim 8 wherein said nitrogen compound is a nitrogen oxide.

10. The resin composition according to claim 9 wherein said nitrogen oxide is a non-metallic nitric acid compound and/or a non-metallic nitrous acid compound.

11. The resin composition according to claim 8 wherein the average particle size of said nitrogen compound is not larger than 100µm.

12. The resin composition according to claim 1 wherein said hydrolysis suppressing agent is a carbodiimide compound, an isocyanate compound or an oxazoline compound.

13. A molded product obtained on molding a resin composition containing at least one biodegradable polysaccharide, a flame retardant additive containing a hydroxide and a hydrolysis suppressing agent for suppressing the hydrolysis of said at least one biodegradable polysaccharide.

14. An electrical product including, as a constituent element thereof, a molded product obtained on molding a resin composition containing at least one biodegradable polysaccharide, a flame retardant additive containing a hydroxide and a hydrolysis suppressing agent for suppressing the hydrolysis of said at least one biodegradable polysaccharide.

15. The electrical product according to claim 14 wherein said constituent element is a casing.

16. A method for the preparation of a resin composition comprising mixing at least one biodegradable polysaccharide, a flame retardant additive containing a hydroxide, and a hydrolysis suppressing agent suppressing the hydrolysis of said at least one polysaccharide.

17. A resin composition containing at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of said at least one polysaccharide.

18. The resin composition according to claim 17 wherein said polysaccharide is cellulose, starch, chitin, chitosan, dextran, one of derivatives thereof, or a copolymer containing at least one thereof.

19. The resin composition according to claim 17 wherein said hydrolysis suppressing agent is a carbodiimide compound, an isocyanate compound or an oxazoline compound.

20. A molded product obtained on molding a resin composition containing at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of said at least one polysaccharide.

21. An electrical product including, as a constituent element thereof, a molded product obtained on molding a resin composition containing at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of said at least one polysaccharide.

22. The electrical product according to claim 21 wherein said constituent element is a casing.

23. A method for the preparation of a resin composition comprising mixing at least one biodegradable polysaccharide, a flame retardant additive containing at least one of an inorganic flame retardant compound, a boric acid based flame retardant compound, a halogen-based flame retardant compound, an organic flame retardant compound, a colloid-based flame retardant compound and a nitrogen-based flame retardant compound, and a hydrolysis suppressing agent for suppressing the hydrolysis of said at least one polysaccharide.
